## Europäisches Patentamt
## European Patent Office
## Office européen des brevets

(19)

(11) Veröffentlichungsnummer: **0 054 722**
**B1**

(12) # EUROPÄISCHE PATENTSCHRIFT

(45) Veröffentlichungstag der Patentschrift:
03.09.86

(21) Anmeldenummer: 81109340.0

(22) Anmeldetag: 30.10.81

(51) Int. Cl.⁴: **F 16 K 31/122**; B 23 B 31/30, F 16 K 15/02

(54) **Entsperrbares Rückschlagventil.**

(30) Priorität: 24.12.80 DE 3049099

(43) Veröffentlichungstag der Anmeldung:
30.06.82 Patentblatt 82/26

(45) Bekanntmachung des Hinweises auf die Patenterteilung:
03.09.86 Patentblatt 86/36

(84) Benannte Vertragsstaaten:
DE FR GB IT

(56) Entgegenhaltungen:
EP-A-0 011 220
DE-A-1 652 676
DE-A-2 852 677
DE-B-2 256 933
FR-A-1 415 410
US-A-3 741 228

"Der Hydraulik-Trainer", A. Schmitt, Vogel-Verlag:
D-8700 Würzburg, 2. Auflage, Nov. 1980, Seite 83,
Bild 4

(73) Patentinhaber: SMW Schneider & Weisshaupt
GmbH, Wiesentalstrasse 28, D-7996
Meckenbeuren (DE)

(72) Erfinder: Hiestand, Karl, Mühlweg 2, D-7798
Pfullendorf (DE)

(74) Vertreter: Engelhardt, Guido, Dipl.- Ing.,
Montafonstrasse 35 Postfach 1350, D-7990
Friedrichshafen 1 (DE)

EP 0 054 722 B1

### Beschreibung

Die Erfindung bezieht sich auf ein entsperrbares Rückschlagventil für einen druckmittelbetätigten Spannzylinder, insbesondere für eine Spanneinrichtung, die mit einem oder zwei umlaufenden Spannzylindern versehen ist, wobei das Rückschlagventil einem Druckraum des Spannzylinders zugeordnet ist und aus einem verstellbar geführten Steuerkolben, der beidseitig vom Druckmittel beaufschlagbar ist, der mit einer einen Druckmitteldurchgang bildenden Freisparung versehen ist und der vorzugsweise achsparallel zu dem Spannzylinder angeordnet ist, und einem Schließelement, das vom Steuerkolben axial verschiebbar ist und mit einer gehäusefesten Dichtfläche zusammenwirkt, besteht.

Umlaufende doppelt wirkende Druckmittelzylinder zur Betätigung von Spannzeugen an Werkzeugmaschinen, bei denen zur wechselseitigen Druckmittelzuführung meist federbelastete in einer Zuleitung zu einer Zylinderkammer angeordnete Rückschlagventile vorgesehen sind, sind in einer großen Anzahl unterschiedlicher Ausgestaltungen bekannt. Mittels dieser Ventile soll ein Druckabfall im jeweils beaufschlagten Zylinderraum unterbunden werden, wenn die Druckmittelversorgung zusammenbricht, Beim Umsteuern des Spannzylinders muß jedoch der betreffende Zylinderraum belüftet werden können.

Alle bisher dazu verwendeten Ventile weisen jedoch den Nachteil auf, daß, da die Entlüftungsleitung erst bei einem Abfall des Druckmitteldruckes geschlossen wird, eine Schließverzögerung und, da durch die Verschiebung des Steuerkolbens zwangläufig eine Volumensvergrößerung auftritt, auch ein Abfall des Druckes in dem von Druckmittel beaufschlagten Zylinderraum vorhanden ist. Dies kann mitunter dazu führen, daß der noch vorhandene Spanndruck nicht mehr ausreicht, um eine zuverlässige Einspannung eines Werkstückes sicherzustellen.

Durch die DE-B-22 56 933 ist zwar ein entsperrbares Rückschlagventil dieser Art bekannt; die elastischen Ringe, die mit den Druckmittelzuführ- und -abführkanälen kommunizierende Radialbohrungen abdecken, werden hierbei durch mit dem Steuerkolben zusammenwirkende Betätigungsorgane in Form von mittels Schrägflächen nach außen zu drückender Bolzen abgehoben. Eine einwandreie Funktion ist bei diesem Ventil jedoch nicht gewährleistet. Die Dichtungsringe unterliegen nämlich der Zentrifugalkraft, so daß diese bei hohen Drehzahlen von den abzudichtenden Kanälen abheben und somit ein Druckabfall in dem druckbeaufschlagten Zylinderraum eintritt. Außerdem ist die Kraft, die zum Aufweiten der Dichtungsringe erforderlich ist, relativ groß; die hoch beanspruchten Ringe, die bei jeder Druckmittelzuführung unrund verformt werden, können daher keine lange Lebensdauer haben und eine zuverlässige Abdichtung über einen längeren Zeitraum gewährleisten. Des weiteren ist, da dieses Ventil nur zentrisch eingebaut werden kann, kein freier Durchgang gegeben. In der Praxis hat sich daher diese Ausgestaltung nicht bewährt.

Des weiteren ist durch das Buch "Der Hydraulik-Trainer" (A. Schmitt), Vogel-Verlag, D-8700 Wurzburg, Nov. 1980, Seite 83, Bild 4, ein entsperrbares Rückschlagventil der eingangs genannten Gattung bekannt. Bei diesem Rückschlagventil ist der Steuerkolben mit einem Verzögerungskegel versehen, der bei einer Beaufschlagung des Steuerkolbens mittels eines unter einem bestimmten Steuerdruck stehenden und über einen gesonderten Steueranschluß zugeführten Mediums von seinem Sitz abgehoben wird. Erst danach wird das Schließelement betätigt, so daß das Ventil durchströmbar ist. Durch das Aufsteuern des Rückschlagventils ist zwar ein gedämpftes Entspannen der unter Druck stehenden Flüssigkeit gewährleistet, so daß keine Schaltstöße entstehen. Um dies zu ermöglichen, sind aber ein zusätzlicher Anschluß sowie ein unter Steuerdruck stehendes Medium und ein Vorsteuerkolben erforderlich. Der Bauaufwand ist demnach erheblich. Des weiteren ist ein derartiges Rückschlagventil bei Aggregaten, bei denen Umschaltungen in kurzer Zeit vorzunehmen sind, nicht einsetzbar.

Aufgabe der Erfindung ist es daher, ein entsperrbares Rückschlagventil zu schaffen, das nicht nur universell einbaubar und einsetzbar ist, sondern bei dem bei einfacher konstruktiver Ausgestaltung auch eine zuverlässige Abdichtung eines druckbeaufschlagten Zylinderraumes gewährleistet ist, ohne daß ein Druckabfall in Kauf genommen werden muß. Es soll vielmehr erreicht werden, daß unmittelbar nach Beendigung einer Druckmittelzuführung in einen Zylinderraum dessen Druckmittelzuführungsleitung verschlossen wird, so daß der aufgebaute Druck stets in voller Höhe erhalten bleibt. Dennoch soll zur Entlüftung die Zuführungsleitung sofort und ohne großen Aufwand geöffnet werden können. Vor allem aber soll sichergestellt sein daß das Schließelement stets plan mit einer großen Fläche an der zugeordneten Dichtfläche anliegt und daß Lageänderungen des Schließelementes vorzunehmen sind, ohne daß dabei ein durch Reibung bedingter Verschleiß in Kauf zu nehmen ist.

Gemäß der Erfindung wird die Aufgabe dadurch gelöst, daß das Schließelement ringförmig und elastisch verformbar ist und eine abstehende Dichtlippe aufweist, die axial beweglich ist, daß die Dichtlippe bei einer Druckmittelzuführung in dem Druckraum des Spannzylinders abhebbar ist, daß die Dichtlippe zu einer Entlüftung des Druckraumes durch eine Verschiebung des Steuerkolbens in die Freisparung einführbar ist. Nach einer andersartigen Ausgestaltung der Erfindung wird die Aufgabe dadurch gelöst, daß das Schließelement ringförmig ausgebildet, bei einer Druckmittelzuführung in dem Druckraum des Spannzylinders abhebbar und zu dessen Entlüftung durch eine Verschiebung des Steuerkolbens in die Freisparung einführbar ist, wobei es angebracht ist, das Schließelement auf einem mit dem Steuerkolben verbundenen Ansatzstück anzuordnen, das gegenüber dem Steuerkolben entgegen der Kraft einer Feder axial verschiebbar geführt ist.

Vorteilhaft ist es auch, die von Druckmittel beaufschlagten wirksamen Stirnflächen des Steuerkolbens zur Einführung der Dichtlippe in die dieser jeweils zugeordneten Freisparung unterschiedlich groß zu bemessen und den Verstellweg des Steuerkolbens durch an diesem und/oder an dem Gehäuse angebrachte Anschläge zu begrenzen.

Die an dem Steuerkolben oder dem Gehäuse oder dem Zwischenstück vorgesehene Freisparung zur Aufnahme der Dichtlippe kann in Form eines kegelförmigen, konkav oder konvex gekrümmten ein- oder mehrfach gestuften Absatzes, als Ringnut oder dgl. ausgebildet werden.

Das Schließelement kann in einfacher Weise als ringförmige Membran ausgebildet werden, die im inneren oder äußeren Bereich an dem Steuerkolben oder dem Gehäuse eingespannt ist und deren Dichtlippe mit einer an dem Gehäuse, dem Zwischenstück oder dem Steuerkolben angearbeiteten, an einer Seite der Freisparung vorgesehenen Dichtfläche zusammenwirkt.

Nach einer andersartigen vorteilhaften Ausgestaltung ist es auch möglich, die axial bewegliche Dichtlippe des Schließelements durch einen an einem an dem Steuerkolben oder dem Gehäuse befestigten, nabenförmig ausgebildeten Ringteil angeformten radial nach außen oder innen abstehenden elastisch verformbaren stegartigen Ansatz zu bilden, der mit einer an dem Gehäuse, dem Zwischenstück oder dem Steuerkolben angearbeiteten, an einer Seite der Freisparung vorgesehenen Dichtfläche zusammenwirkt. Um eine hohe Elastizität sowie eine sichere Abdichtung zu gewährleisten, ist es hierbei angebracht, den Ansatz in seinem Endbereich mit einer an der zugeordneten Dichtfläche anliegenden Verdickung zu versehen.

Außerdem ist es sehr vorteilhaft, die gesamten das Rückschlagventil bildenden Bauteile in einer diese aufnehmenden als Gehäuse ausgebildeten Büchse anzuordnen, die in eine Bohrung des Spannzylinders einsetzbar ist. Auf diese Weise ist das Rückschlagventil in einer Art Patrone untergebracht und kann leicht ein- und ausgetauscht werden.

Das gemäß der Erfindung ausgebildete entsperrbare Rückschlagventil ist nicht nur einfach in der konstruktiven Ausgestaltung und damit ohne Schwierigkeiten wirtschaftlich herzustellen, sondern es ist auch sehr zuverlässig in der Funktionsweise und gewährleistet vor allem unmittelbar nach Beendigung einer Druckmittelzuführung eine sichere Abdichtung des beaufschlagten Zylinderraumes. Wird nämlich eine in dem Anspruch 1 oder in dem Anspruch 2 angegebene Ausgestaltung getroffen, so ist sichergestellt, daß sich bei einer Druckmittelzuführung das Schließelement bzw. dessen Dichtlippe von der Dichtfläche zuverlässig abhebt, bei Beendigung der Druckmittelzuführung aber sofort an dieser wiederum zur Anlage kommt, und zwar mit einer großen Fläche, so daß der Druckraum, auch wenn beiderseits des Schließelements bzw. dessen Dichtlippe die Drücke gleich sind, sofort druckdicht verschlossen ist. Je größer beispielsweise durch Leckverluste in den Zuführungsleitungen oder dgl. die Druckdifferen jedoch wird, um so höher ist die auf das Schließelement bzw. die Dichtlippe einwirkende Anpreßkraft. Und zur Entlüftung des Druckraumes ist der Steuerkolben bzw. ein Teil von diesem lediglich durch das auf diesen einwirkende Druckmittel derart zu verschieben, daß die Dichtlippe bzw. das Schließelement in die vorgesehne Freisparung eingeführt wird. Das Druckmittel kann bei dieser Betriebsstellung um die Dichtlippe herum abströmen.

Das gemäß der Erfindung ausgebildete entsperrbare Rückschlagventil kann an beliebiger Stelle in eine Druckmittelzuführungsleitung eingesetzt werden, so daß der freie Durchgang eines Spannzylinders durch dieses nicht behindert wird. Auch unterliegen dessen einzelne Bauteile, sofern eine achsparallele Anordnung gewählt wird, nicht der Zentrifugalkraft. Und dadurch das Druckmittel lediglich die Dichtlippe axial und der Steuerkolben in Achsrichtung bewegt werden und das schließelement oder dessen Dichtlippe nicht an irgend einem Bauteil anliegt, sind diese keinem Verschleiß unterworfen, so daß über einen langen Zeitraum eine sichere Funktion gewährleistet ist.

Weitere Einzelheiten des gemäß der Erfindung ausgebildeten entsperrbaren Rückschlagventils sind den in der Zeichnung dargestellten Ausführungsbeispielen, die nachfolgend im einzelnen erläutert sind, zu entnehmen. Hierbei zeigen, jeweils im Schnitt:

Fig. 1 ein einem Spannzylinder zugeordnetes entsperrbares Rückschlagventil bei Druckmittelzuführung (obere Hälfte) und nach Beendigung der Druckmittelzuführung (untere Hälfte),

Fig. 2 das Rückschlagventil nach Fig. 1 bei Entlüftung des zugeordneten Druckraumes,

Fig. 3 ein weiteres Ausführungsbeispiel eines entsperrbaren Rückschlagventils gemäß Fig. 1,

Fig. 4 die bei dem Rückschlagventil nach Fig. 3 vorgesehene Dichtung in vergrößertem Maßstab und

Fig. 5 ein weiteres Ausführungsbeispiel eines entsperrbaren Rückschlagventils.

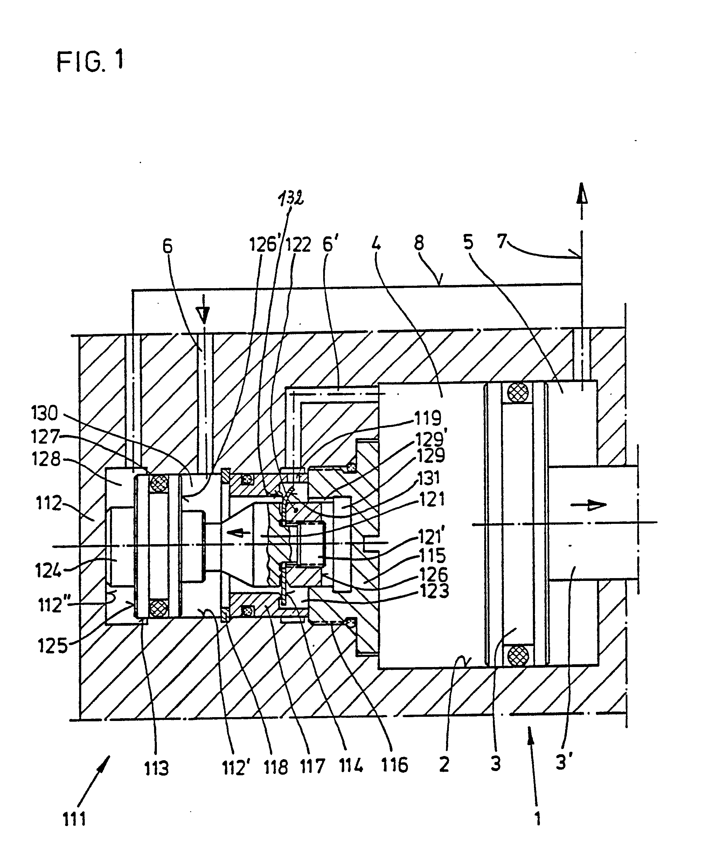

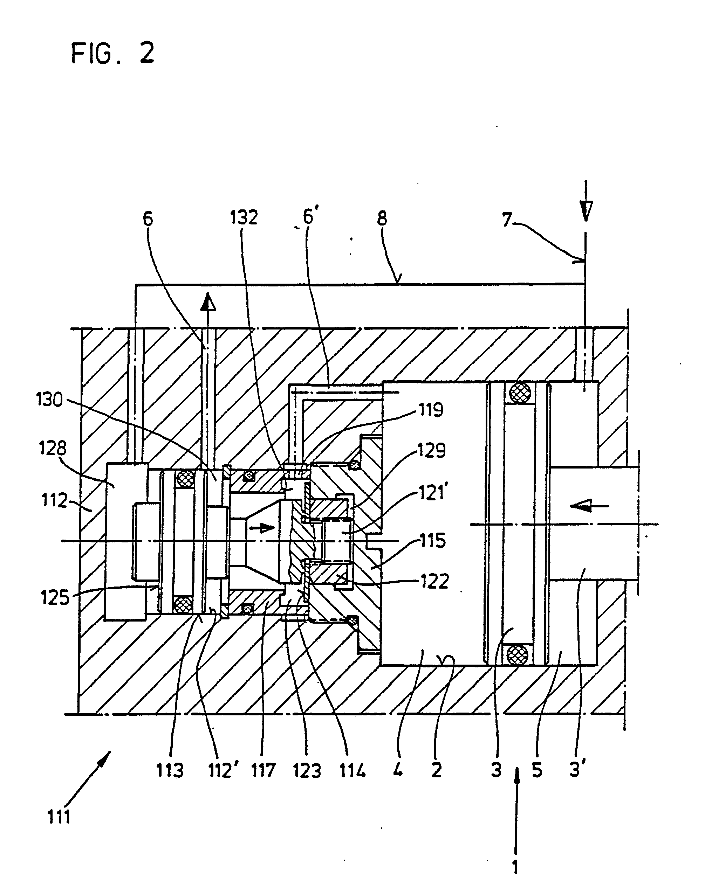

Das in den Fig. 1 und 2 dargestellte und mit 111 bezeichnete entsperrbare Rückschlagventil ist einem Spannzylinder 1 zugeordnet, der aus einem in einem Zylinderraum 2 verschiebbar angeordneten und von Druckmittel beaufschlagten Spannkolben 3 besteht. Durch den Kolben 3, dessen Kolbenstange 3' mit einer nicht gezeigten Spanneinrichtung in Triebverbindung steht, wird der Zylinderraum 2 in die beiden Druckräume 4 und 5 unterteilt, denen Druckmittel über die Leitungen 6 und 6' bzw. 7 und 8 zugeführt werden kann.

Mittels des entsperrbaren Rückschlagventils 111 ist die Druckmittelzufuhr in den Spannzylinder 1 dergestalt zu steuern, daß bei einer Beaufschlagung des Druckraumes 4 der Druckraum 5 entlüftet ist und daß bei Beendigung der Druckmittelzufuhr in den Druckraum 4 dieser sofort abgesperrt wird, so daß der in diesem aufgebaute Druck in voller Höhe erhalten bleibt und keine Druckminderung durch Volumensänderungen eintritt. Selbstverständlich ist dem Druckraum 5, sofern der Kolben 3 beidseitig von Druckmittel beaufschlagt werden soll, ebenfalls ein in gleicher Weise auszubildendes Rückschlagventil zuzuordnen.

Das in den Fig. 1 und 2 dargestellte entsperrbare Rückschlagventil 111 besteht hierbei aus einem in einer Bohrung 112' eines Gehäuses 112 eingesetzten Steuerkolben 113 sowie einem Schließelement 114, das mit diesem zusammenwirkt. Mittels eines Deckels 115, der in eine Gewindebohrung 116 eingeschraubt ist, ist die Bohrung 112' verschlossen und ein in dieses eingesetztes Zwischenstück 117, das sich an einem Sprengring 118 abstützt, unverschiebbar gehalten. .

Der Steuerkolben 113 weist einen abstehenden Ansatz 121 auf, der das elastisch verformbare Schließelement 114 trägt. Dazu ist an dem Steuerkolben 113 ein Gewindeansatz 121' angearbeitet, auf den ein Ring 122 aufgeschraubt ist. Das Schließelement 114, das als Ringmembran ausgebildet ist und mit ihrer Dichtlippe 131 in eine in dem Zwischenstück 117 vorgesehene Freisparung 123 hineinragt, ist somit zwischen dem Ansatz 121 und dem aufgeschraubten Ring 122 fest eingespannt.

Bei der in Fig. 1 gezeigten Betriebsstellung strömt Druckmittel über die Leitung 6 in den Druckraum 130 und von diesem, da der Steuerkolben 113 sich in der linken Endstellung befindet und die Dichtlippe 131 durch das Druckmittel von der an dem Zwischenstück 117 vorgesehenen mit einer Dichtkante ausgestatteten Dichtfläche 132 abgehoben wird, über die Freisparung 123 den in das Zwischenstück 117 eingearbeiteten Kanal 119 sowie die Leitung 6' in den Druckraum 4. Sobald dort der entsprechende Druck aufgebaut ist und somit kein Druckmittel mehr strömt, legt sich die Dichtlippe 131, wie dies in der unteren Hälfte der Fig. 1 dargestellt ist, selbsttätig an der Dichtfläche 132 an, so daß der Druck in dem Druckraum 4 eingesperrt ist. Der Steuerkolben 113 stützt sich in dieser Betriebsstellung, da der Druckraum 128 entlüftet und die wirksame Kolbenfläche 126 sowie die Fläche 126' beaufschlagt sind, mittels eines Ansatzes 124 an der Fläche 112'' des Gehäuses 112 ab. Durch eine in den Deckel 115 eingearbeitete Nut 129' ist der Druckraum 129 ständig mit der Freisparung 123 verbunden. .

Wird dagegen gemäß Fig. 2 bei entlüfteter Leitung 6 dem Druckraum 128 Druckmittel zugeführt und somit die Kolbenfläche 125 des mit einer Dichtung 127 versehenen Steuerkolbens 113 beaufschlagt, so wird der Steuerkolben 113 nach rechts bis zur Anlage des Gewindeansatzes 121' an dem Deckel 115 verschoben. Dadurch gelangt die Dichtlippe 131 des Schließelements 114 in die Freisparung 123, so daß Druckmittel aus dem Druckraum 4 abströmen kann und dieser somit entlüftet ist.

Durch eine Druckmittelzufuhr in den Druckraum 5 des Spannzylinders 1 kann somit der Kolben 3 nach links verschoben werden. Da die Kolbenfläche 125 größer bemessen ist als die wirksame von dem eingesperrten Druck beaufschlagte Kolbenfläche 126 - selbstverständlich wirkt dieser Druck auch auf das Schließelement 114 ein - ist somit bei gleichem Druckmitteldruck die nach rechts auf den Steuerkolben 113 einwirkende Kraft größer als die von dem eingesperrten Druckmittel erzeugte Gegenkraft. Der Steuerkolben 113 kann demnach trotz des in dem Druckraum 4 herrschenden Druckes verschoben werden, so daß dieser entlüftet wird.

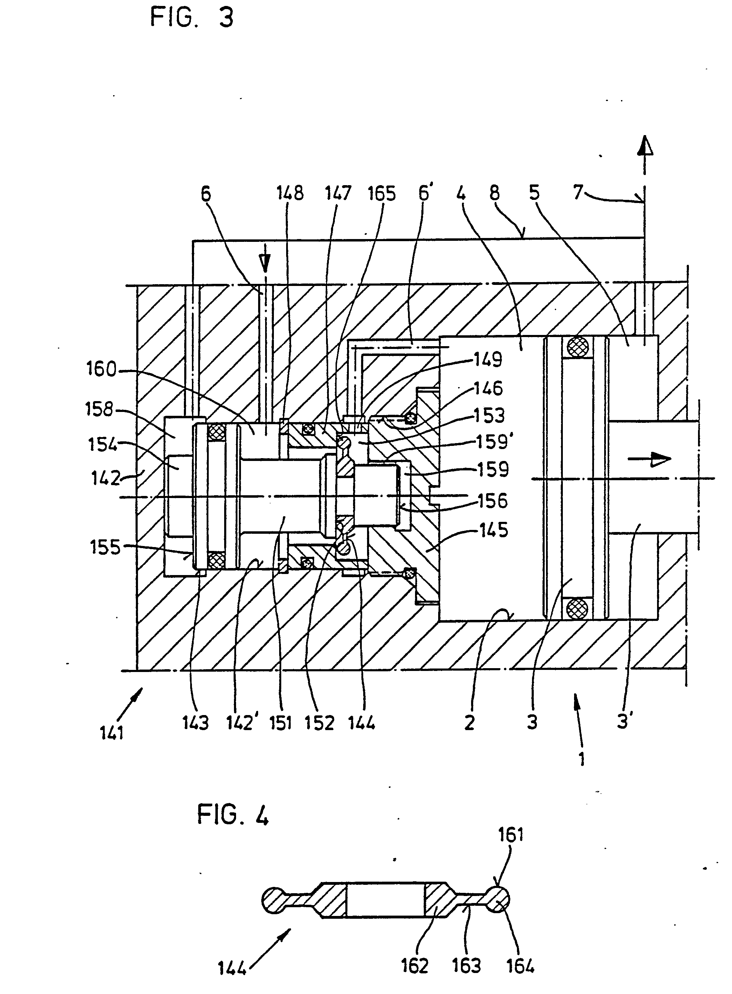

Bei dem in gleicher Weise wirksamen in Fig. 3 dargestellten entsperrbaren Rückschlagventil 141 ist der verschiebbar in einer Bohrung 142' eines Gehäuses 142 angeordnete Steuerkolben 143 mit einem Schließelement 144 ausgestattet, das, wie dies in Fig. 4 gezeigt ist, aus einem nabenförmig ausgebildeten Ringteil 162 und einem an diesen angeformten Ansatz 163 besteht. Im äußeren Bereich ist der Ansatz 163, der elastisch verformbar ist, mit einer Verdickung 164 versehen, die somit die Dichtlippe 161 bildet.

Das in einer in einen Ansatz 151 des Steuerkolbens 143 eingearbeiteten Nut 152 mit Vorspannung gehaltene Schließelement 144 wirkt wiederum mit einem ebenfalls in die Bohrung 142' eingesetzten Zwischenstück 147 zusammen, das durch einen in eine Gewindebohrung 146 eingeschraubten Deckel 145 sowie einen Sprengring 148 unverschiebbar gehalten und mit einem Druckmittelkanal 149 versehen ist. Dazu weist das Zwischenstück 147 eine Freisparung 153 auf, in die das Schließelement 144 zur Entlüftung des Druckraumes 4 einführbar ist.

Bei einer Druckmittelzufuhr über die Leitung 6 sowie den Raum 160 wird der Steuerkolben 143 nach links bis zur Anlage des Ansatzes 154 an dem Gehäuse 142 verschoben. Durch das Druckmittel wird hierbei die Dichtlippe 161 des Schließelemments 144 von der Dichtfläche 165 des Zwischenstückes 147 abgehoben, so daß dieses über den Kanal 149 sowie die Leitung 6' in den Druckraum 4 des Spannzylinders 1 gelangen kann. Aufgrund der Elastizität des Ansatzes 163 wird jedoch, sobald die Drucktätig eingesperrt.

Zur Entlüftung des Druckraumes 4 ist dagegen durch Druckmittelzufuhr über die Leitung 8 in den Raum 158 die Kolbenfläche 155 zu beaufschlagen, so daß der Steuerkolben 143 trotz des in dem Druckraum 159, der über eine Nut 159' mit dem Druckraum 4 verbunden ist, herrschenden Druckes nach rechts verschoben werden kann. Die von dem eingesperrten Druck beaufschlagte wirksame Kolbenfläche 156 sowie die ebenfalls beaufschlagte Fläche des Schließelements 144 sind nämlich zusammen kleiner bemessen als die Kolbenfläche 155, die bei gleichem Druckmitteldruck hervorgerufene Differenzkraft bewirkt somit die axiale Verschiebung des Steuerkolbens 143.

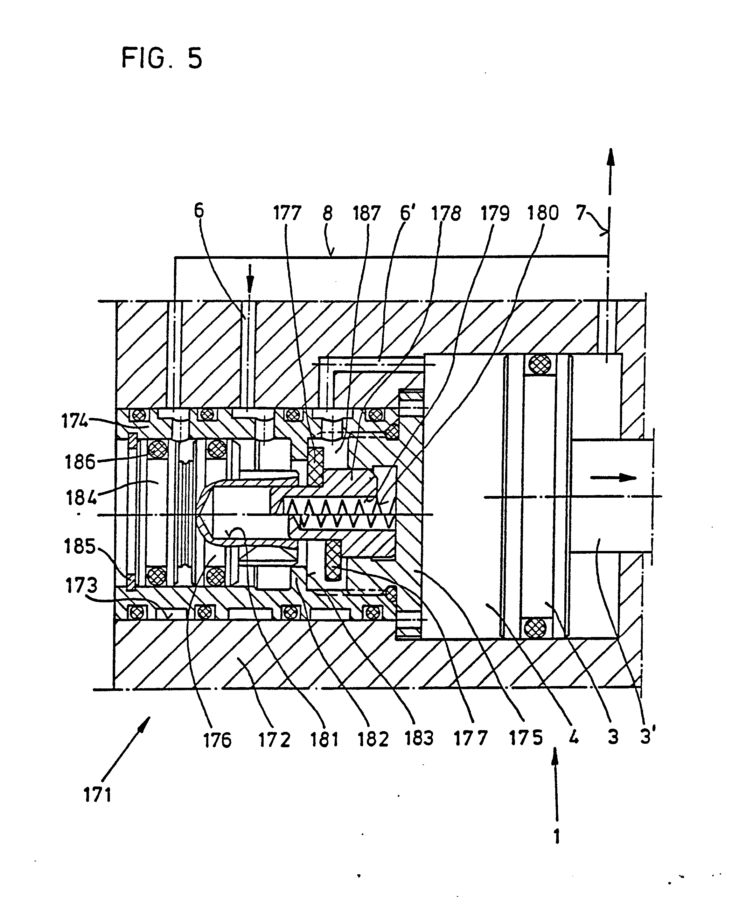

Das Rückschlagventil 171 gemäß Fig. 5 ist in Form einer Patrone ausgebildet und leicht austauschbar in einer Gehäusewand 172 des Spannzylinders 1 angeordnet. Dazu ist in diese eine Bohrung 173 eingearbeitet und die gesamten das Rückschlagventil 171 bildenden Bauteile sind in einer Büchse 174 eingesetzt, die mittels eines in diese eingeschraubten Deckels 175 gehalten ist.

Bei dieser Ausgestaltung ist das Schließelement 177 gegenüber dem Steuerkolben 176 verschiebbar angeordnet. Dazu dient ein an diesem angebrachtes Ansatzstück 178, das in einer Bohrung 181 des Steuerkolbens 176 geführt und engegen der Kraft einer Feder 180, die in eine Bohrung 179 eingreift und sich an denm Deckel 175 abstützt, verschiebbar ist. Das Schließelement 177 wirkt hierbei mit einer Dichtfläche 183 zusammen, die an einem an der Büchse 174 angeformten, radial nach innen ragenden Steg 182 vorgesehen ist. Nach der Darstellung der unteren Hälfte des Ansatzstückes 178 kann das Schließelement 177 bei einer Druckmittelxuführung in den Druckraum 4 in eine Freisparung 187 ausweichen.

Die Büchse 174 ist durch einen weiteren Deckel 184, in den eine Dichtung 186 eingesetzt und der durch einen Sprengring 185 gehalten ist verschlossen.

**Patentansprüche**

1. Entsperrbares Rückschlagventil für einen druckmittelbetätigten Spannzylinder (1 - 5), insbesondere für eine Spanneinrichtung, die mit einem oder zwei umlaufenden Spannzylindern (1 - 5) versehen ist, wobei das Rückschlagventil einem Druckraum (4) des Spannzylinders (1 - 5) zugeordnet ist und besteht aus:

a) einem verstellbar geführten Steuerkolben (113; 143; 176)
- der beidseitig vom Druckmittel beaufschlagbar ist,
- der mit einer einen Druckmitteldurchgang bildenden Freisparung (123; 153; 187) versehen ist,
- und der vorzugsweise achsparallel zu dem Spannzylinder (1 - 5) angeordnat ist.

b) einem Schließelement (114; 144; 177), das vom Steuerkolben axial verschiebbar ist und mit einer gehäusefesten Dichtfläche (132; 165; 183) zusammenwirkt,
dadurch gekennzeichnet,
-daß das Schließelement (114; 144) ringförmig und elastisch verformbar ist und eine abstehende Dichtlippe (131; 161) aufweist, die axial beweglich ist,
-daß die Dichtlippe (131; 161) bei einer Druckmittelzuführung in dem Druckraum (4) des Spannzylinders (1 - 5) abhebbar ist,
- daß die Dichtlippe (131; 181) zu einer Entlüftung des Druckraumes (4) durch eine Verschiebung des Steuerkolbens in die Frsisparung (123; 153) einführbar ist.

2. Entsperrbares Rückschlagventil gemäß dem Oberbegriff des Anspruchs 1,
dadurch gekennzeichnet
- daß das Schließelement (177) ringförmig ausgebildet ist und auf einem mit dem Steuerkolben (176) verbundenen Ansatzstück (178) angeordnet ist, das gegenüber dem Steuerkolben (176) entgegen der Kraft einer Feder (180) axial verschiebbar geführt ist,
- daß das Schließelement (177) bei einer Druckmittelzuführung in dem Druckraum (4) des Spannzylinders (1 - 5) abhebbar ist und
daß das Schließelement (177) zur Entlüftung des Druckraumes (4) durch eine Verschiebung des Steuerkolbens (176) in die Freisparung (187) einführbar ist.

3. Entsperrbares Rückschlagventil nach Anspruch 1,
dadurch gekennzeichnet,
daß die von Druckmittel beaufschlagten wirksamen Stirnflächen (125, 126; 155, 156) des Steuerkolbens (113; 143) zur Einführung der Oichtlippe (131; 161) in die diessr jeweils zugeordneten Freisparung (123; 153) unterschiedlich groß bemessen sind.

4. Entsperrbares Rückschlagventil nach einem der Ansprüche 1 bis 3,
dadurch gekennzeichnet,
daß der Verstellweg des Steuerkolbens (113; 143) durch an diesem und/oder an dem ßehäuse (112; 142) angebrachte Anschläge (124; 121', 154) begrenzt ist.

5. Entsperrbares Rückschlagventil nach einem der Ansprüche 1, 3 oder 4,
dadurch gekennzeichnet,
daß die an dem Steuerkolben (113; 143) oder dem Gehäuse (112; 142) oder dem Zwischenstück (117; 147) vorgesehene Freisparung (123; 153) zur Aufnahme der Dichtlippe (157; 161) in Form eines kegelförmigen, konkav oder konvex gekrümmten, ein- oder mehrfach gestuften Absatzes, als Ringnut oder dgl. ausgebildet ist.

6. Entsperrbares Rückschlagventil nach einem der Ansprüche 1, 4 oder 5,
dadurch gekennzeichnet,
daß das Schließelement (114) als ringförmige Membran ausgebildet ist, die im inneren oder äußeren Bereich an dem Steuerkolben (113) oder dem Gehäuse (112) eingespannt ist und deren Dichtlippe (131) mit einer an dem Gehäuse (112), dem Zwischenstück (117) oder dem Steuerkolben (113) eingearbeiteten, an einer Seite der Freisparung (123) vorgesehenen Dichtfläche (132) zusammenwirkt.

7. Entsperrbares Rückschlagventil nach einem der Ansprüche 1, 4 bis 6,
dadurch gekennzeichnet,
daß die axial bewegliche Dichtlippe (161) des Schließelements (144) durch einen an einem an dem Steuerkolben (143) oder dem ßehäuse (142) oder dem Zwischenstück (147) befestigten, nabenförmig ausgebildeten Ringteil (162) angeformten radial nach außen oder innen abstehenden elastisch verformbaren stegartigen Ansatz (163) gebildet ist, der mit einer an dem ßehäuse (142), dem Zwischenstück (147) oder dem Steuerkolben (143) angearbeiteten an einer Seite der Freisparung (153) vorgesehenen Dichtfläche (175) zusammenwirkt.

8. Entsperrbares Rückschlagventil nach Anspruch 7,
dadurch gekennzeichnet,
daß der Ansatz (163) in seinem Endbereich mit einer an der zugeordneten Dichtfläche (165) anliegenden Verdickung (164) versehen ist.

9. Entsperrbares Rückschlagventil nach einem der Ansprüche 1 bis 8,
dadurch gekennzeichnet,
daß die das Ruckschlegventil (171) bildenden Bauteile in einer diese aufnehmenden, als Gehäuse ausgebildeten Büchse (174) angeordnet sind, die in einer Bohrung (173) des Spannzylinders (Gehäusewand 172) einsetzbar ist.

**Revendications**

1. Valve de retenue déverrouillable pour un cylindre de serrage (1 - 5) à commande hydraulique, en particulier pour un équipement de serrage qui est équipé de un ou deux cylindres de serrage (1 - 5). La valve de retenue dispose d'une chambre de pression (4) du cylindre de serrage (1 - 5) et se compose de:
a) Un piston de commande guidé, réglable (113; 143; 176)
- qui est soumis à la pression hydraulique des deux côtés,
- qui est muni d'un évidement (123; 153; 187) formant un passage d'huile hydraulique,
- et qui est place, de préférence parallèlement à l'axe du cylindre de serrage (1 - 5).
b) Un élément de fermeture (114; 144; 177) qui est déplacable axialement par le piston de commande et qui agit avec une face d'étanchéité (132; 165; 183),
ainsi désigné,
- de sorte que l'élément de fermeture (114; 144) est de forme circulaire et déformable élastiquement et présente une levre d'étanchéité (131; 161) dépassant, se mouvant axialement,
- de sorte que la lèvre d'étanchéité (131; 161) est soulevable à une arrivée d'huile hydraulique dans la chambre de pression (4) du cylindre de serrage (1 - 5),
- de sorte que la lèvre d'étanchéité (131; 161) qui est introduisible pour un désaérage de la chambre de pression (4) par un déplacement du piston de commande dans l'évidement (123; 153).

2. Valve de retenue déverrouillable selon le terme général du droit 1,
ainsi désigné,
- de sorte que l'élément de fermeture (177) est conçu de forme circulaire sur un embout (178) relié avec le piston de commande (176) qui est guidé axialement, à l'opposé du piston de commande (176) contre la force d'un ressort (180),
- de sorte que l'élément de fermeture (177) est soulevable à une admission de produit hydraulique dans la chambre de pression (4) du cylindre de serrage (1 - 5)
- de sorte que l'élément de fermeture (177) pour le désaérage de la chambre de pression (4) est introduisable par un déplacement du piston de commande (176) dans l'évidement (187)

3. Valve de retenue déverrouillable, selon le droit 1,
ainsi désigné,
de sorte que les faces frontales (125, 126; 155, 156), efficaces soumises au produit hydraulique,du piston de commande (113; 143) pour l'introduction des lèvres d'étanchéité (131; 161) dans lesquelles elles sont dimensionnées différemment de cet évidement (123; 153).

4. Valve de retenue déverrouillable, selon un des droits 1 à 3,
ainsi désigné,
de sorte que la course de réglage du piston de commande (113; 143) est limitée à celle-ci et/ou aux butées (124; 121', 154) placées sur le boîtier (112; 142).

5. Valve de retenue déverrouillable, selon un des droits 1, 3 ou 4,
ainsi désigné,
de sorte que l'évidement (123; 153) prévu au piston de commande (113; 143) ou au boîtier (112; 142) ou à la pièce intermédiaire (117; 147), servant à la prise de la lèvre d'étanchéité (157; 161) est conçu en forme d'un embout de un ou plusieurs étages de forme conique, coudé concavement ou convexement, en tant que gorge circulaire ou similaire.

6. Valve de retenue déverrouillable, selon un des droits 1, 4 ou 5,
ainsi désigné, de sorte que l'élément de fermeture (114) qui est conçu en tant que membrane de forme circulaire qui est serrée dans la zone interne au piston de commande (113), ou le boîtier (112) et dont la lèvre d'étanchéité (131) agit avec une face d'étanchéité (132) prévue sur un côté de l'évidement (123) usiné sur le boîtier (112), la pièce intermédiaire (117) ou le piston de commande (113).

7. Valve de retenue déverrouillable, selon un des droits 1, 4 à 6
ainsi désigné,

de sorte que, la lèvre d'étanchéité (161) déplacable axialement de l'élément de fermeture (144) est conçue par une pièce circulaire (162) sous forme de moyeu fixée à un embout renforcé (163) déformable élastiquement, dépassant radialement, vers l'intérieur ou l'extérieur, au piston de commande (143) ou au boîtier (142) ou à la pièce intermédiaire (147). Cet embout agit avec une face d'étanchéité (175) prévue au boîtier (142), la pièce intermédiaire (147) ou le piston de commande (143). Le piston est muni d'un évidement (153) sur un côté.

8. Valve de retenue déverrouillable, selon le droit 7,

ainsi désigné,

de sorte que l'embout (163) est muni dans sa zone finale d'une épaisseur (164) portant sur la face d'étanchéité (165).

9. Valve de retenue déverrouillable, selon un des droits 1 à 8,

ainsi désigné,

de sorte que, les pièces constitutives formant la valve de retenue (171) sont disposées dans une douille (174) en tant que boîtier, insérable dans un perçage (173) du cylindre de serrage (paroi du boîtier 172).

**Claims**

1. Pilot control check valve for a pressure actuated clamping cylinder (1-5), particularly for a clamping device having one or two rotary clamping cylinders (1-5), whereby the check valve is assigned to the pressure chamber (4) of the clamping cylinder (1-5) and comprises: (a) an adjustably guided control piston (113; 143; 176) applyable by pressure from both sides, having a bore (123; 153; 187) as a line for the pressure fluid and which is oriented parallel to the axis of the clamping cylinder (1-5),

(b) a closing element (114; 144; 177) axially shiftable by the control piston and co-operating with a sealing surface (132; 165; 183), characterized in

that the closing element (114; 144) is ring-shaped and resiliently deformable and has a projecting sealing edge (131; 161) being axially movable,

that the sealing edge (131; 161) is raisable by pressure fluid led into the pressure chamber (4) of the clamping cylinder (1-5),

that the sealing edge (131; 161) in order to ventilate the pressure chamber (4) is movable into the opening (123; 153) by shifting the control piston.

2. Pilot control check valve of claim 1, characterized in

that the closing element (177) is ring-shaped and located on an extension piece (178) connected to the control piston (176), which extension piece is axially shiftable guided against the control piston (176) towards the power of a spring (180),

that the closing element (177) when pressure fluid is conveyed into the pressure chamber (4) of the clamping cylinder (1-5) is liftable, and

that the closing element (177) is movable into the bore (187) by shifting the control piston (176) in order to ventilate the pressure chamber (4).

3. Pilot control check valve of claim 1, characterized in that the effective front surfaces (125, 126; 155, 156) of the control piston (113; 143) applied by the pressure fluid have different sizes in order to move the sealing edge (131; 161) into the bore (123; 153) assigned to the respective sealing edge.

4. Pilot control check valve of one of the claims 1 through 3, characterized in that the space for moving the control piston (113; 143) is limited by stops (124; 121', 154) at the piston and/or at the housing (112; 142).

5. Pilot control check valve of one of the claims 1, 3 or 4, characterized in that the bore (123; 153) at the control piston (113; 143) or the housing (112-142) or the intermediate part (117; 147) to take over the sealing edge (157; 161) is designed as an extension being conical or convex, singularly or multiple stepped, as a ring-shaped groove or the like.

6. Pilot control check valve of one of the claims 1, 4 or 5, characterized in that the closing element (114) is designed as a ring-shaped membrane mounted to the inner or outer area to the control piston (113) or the housing (112) and the sealing edge (131) of which cooperates with a sealing surface (132) mounted to the housing (112), the intermediate part (117) or the control piston (113) at one side of the bore (123).

7. Pilot control check valve of one of the claims 1, 4 through 6, characterized in that the axially movable sealing edge (161) of the closing elements (144) is formed by an extension (163) being bridge shaped and extending radially outwardly or inwardly and being elastically deformable and mounted to the control piston (143) or the housing (142) or the intermediate part (147) as a hub-shaped ring part (162), which extension cooperates with a sealing surface (175) provided at one side of the bore (153) and located at the housing (142), the intermediate part (147) or the control piston (143).

8. Pilot control check valve of claim 7, characterized in that the extension (163) at its end area is provided with a thicker part (164) engaging the respective sealing surface (165).

9. Pilot control check valve of one of the claims 1 through 8, characterized in that the parts forming the check valve (171) are located in a housingshaped case (174), which may be inserted into a bore (173) (wall 172 of the housing) of the clamping cylinder.

0 054 722

FIG. 1

# FIG. 2

FIG. 3

FIG. 4

FIG. 5